# EUROPÄISCHE PATENTSCHRIFT

(11) **EP 1 651 481 B1**
(45) Veröffentlichungstag und Bekanntmachung des Hinweises auf die Patenterteilung: **29.10.2008**
(21) Anmeldenummer: 04763734.3
(22) Anmeldetag: 03.08.2004
(51) Int. Cl.: B60S 1/34

(54) **VERFAHREN ZUR HERSTELLUNG EINES WISCHARMS, INSBESONDERE FÜR SCHEIBENREINIGUNSANLAGEN IN FAHRZEUGEN**
METHOD FOR PRODUCING A WIPER ARM, ESPECIALLY FOR WINDOW WIPING SYSTEMS IN VEHICLES
PROCEDE DE FABRICATION D'UN BRAS D'ESSUIE-GLACE NOTAMMENT DESTINE A DES SYSTEMES D'ESSUIE-GLACE DE VEHICULES

(30) Priorität: 06.08.2003 DE 10335853
(43) Veröffentlichungstag der Anmeldung: 03.05.2006
(73) Patentinhaber: Valeo Wischersysteme GmbH, 74321 Bietigheim-Bissingen (DE)
(72) Erfinder: LÖSCH, Manfred, 74321 Bietigheim-Bissingen (DE)
(74) Vertreter: Jahn, Wolf-Diethart
(86) Internationale Anmeldenummer: PCT/EP2004/008675
(87) Internationale Veröffentlichungsnummer: WO 2005/016713

(56) Entgegenhaltungen:
- WO-A-02/090154
- DE-A- 19 615 867

## Beschreibung

Die Erfindung betrifft ein Verfahren zur Herstellung eines Wischarms, insbesondere für Scheibenreinigungsanlagen in Fahrzeugen.

Ein Wischarm besteht aus einem Wischarmbefestigungsteil, einem Wischarmgelenkteil, das mit dem Wischarmbefestigungsteil gelenkig verbunden ist, und einem Wischblatt, das am Wischarmgelenkteil gehalten ist. Eine zwischen Wischarmbefestigungsteil und Wischarmgelenkteil eingehängte Zugfeder sorgt für den Anlagedruck des Wischblattes auf der Scheibenoberfläche. Das Wischarmbefestigungsteil wird an seinem von dem Wischarmgelenkteil abgewandten Ende auf die Wischerwelle aufgesetzt und auf dieser befestigt.

Bei dem Wischarmbefestigungsteil handelt es sich üblicherweise um ein Metall-Druckgußteil, insbesondere Zink- oder Aluminium-Druckgußteil. Das Wischarmgelenkteil wird hingegen aus Stahlblech gefertigt. Bei der Herstellung des Wischarms erfolgt die Montage seiner Einzelkomponenten, bevor der gesamte Wischarm lackiert wird. Grundsätzlich kommen zur Lackierung eines Wischarms verschiedene Lackierverfahren in Betracht. Wegen des vorgegebenen Fertigungsverfahrens, das eine Montage des Wischarms vor der Lackierung erfordert, scheiden aber solche Lackierverfahren aus, bei denen eine vollflächige Beschichtung nicht gewährleistet ist. Im Gelenkbereich des Wischarms liegen nun aber die Innenflächen des Wischarmgelenkteils eng an der Außenoberfläche des Wischarmbefestigungsteils an und bilden dort einen engen Spalt. Wenn in diesem Spalt eine durchgehende Beschichtung, insbesondere des aus Stahlblech bestehenden Wischarmgelenkteils, nicht gewährleistet ist, kann Korrosion auftreten, die zu einer Funktionsstörung führt. Durch die Korrosion wird nämlich die Reibung im Gelenkbereich erhöht, wodurch es zu einer Verringerung der Anpreßkraft des Wischblattes auf der Scheibenoberfläche kommt. Durch eine solche Verringerung der Anpreßkraft ist die Funktion des Wischarms gefährdet.

Aus diesem Grund geht man in der Fachwelt davon aus, daß zur Lackierung des fertig montierten Wischarms eine Tauchtechnik zur Anwendung kommen muß. Die Tauchlackierung hat gegenüber anderen Lackierverfahren wie Naßspritzlackierung oder Pulverbeschichtung den Vorteil, daß auch abgedeckte Flächen von den Lackpartikeln sicher erreicht werden und somit eine durchgehende Beschichtung gewährleistet ist.

Andererseits erfordert der Einsatz der Tauchlackierung eine hohe Investition, die sich in erhöhten Gesamtherstellungskosten niederschlägt. Als Alternative zur Tauchlackierung kommt noch die separate Vorlackierung des Wischarmgelenkteils in Betracht. Auch diese ist jedoch aufwendig; sie führt annähernd zu einer Verdoppelung der Lackierkosten. Überdies entstehen höhere Lackabfallmengen und ein höherer Energiebedarf, so daß auch Bedenken hinsichtlich der Umweltverträglichkeit bestehen. Ein gathungsgemäßes Verfahren zur Herstellung eines Wischarmes und ein solcher Wischarm sind aus der DE-A-19615867 bekannt.

Durch das erfindungsgemäße Verfahren wird die Korrosionsfreiheit im Gelenkbereich des Wischarms ohne kostenintensive Tauchlackierung gewährleistet. Gemäß der Erfindung wird das Wischarmgelenkteil in einem ersten Schritt aus einem einseitig vorbeschichteten Blechmaterial gestanzt. Im nächsten Schritt wird das Stanzteil so gebogen, daß die beschichtete Fläche innenseitig gelegen ist. Dann wird das Wischarmbefestigungsteil mit dem Wischarmgelenkteil mittels eines Gelenkbolzens zusammengebaut. Anschließend erfolgt dann die Lackierung des Wischarms durch eine Spritz- oder Pulvertechnik, wobei in Kauf genommen werden kann, daß abgedeckte Flächenbereiche von der Lackschicht nicht oder nur unvollständig erreicht werden. Die an dem Wischarmbefestigungsteil anliegenden oder in engem Abstand von diesem gelegenen Innenflächen des Wischarmgelenkteils sind mit der Vorbeschichtung des Blechmaterials versehen, so daß sie gegen Korrosion geschützt sind. Durch den Wegfall der Investitionskosten für eine Tauchlackieranlage entsteht ein spürbarer Wettbewerbsvorteil.

Einseitig vorbeschichtetes Blechmaterial ist als "Coil-Coating"-Material bekannt. Dieses auf Rollen gelieferte, einseitig beschichtete Bandmaterial wird derzeit beispielsweise bei der Herstellung von Waschmaschinen verwendet, jedoch in einer Materialstärke von bis zu 0,5 mm, die für einen Wischarm unzureichend ist. Bei dem erfindungsgemäßen Verfahren wird ein Coil-Coating-Material in einer Stärke von 1,2 bis 2 mm verwendet.

Bei der bevorzugten Ausführungsform des Verfahrens wird das Wischarmgelenkteil U-kanalförmig gebogen. In dieser Form ist es besonders für die Herstellung eines modernen Wischarms mit flachem Wischblatt geeignet.

Weitere Vorteile und Merkmale der Erfindung ergeben sich aus der folgenden Beschreibung und aus den beigefügten Zeichnungen. In den Zeichnungen zeigen:
- Figur 1 eine schematische Perspektivansicht eines Wischarms;
- Figur 2 einen Schnitt längs Linie II-II in Figur 1; und
- Figur 3 ein Flußdiagramm, das die Herstellung des Wischarms veranschaulicht.

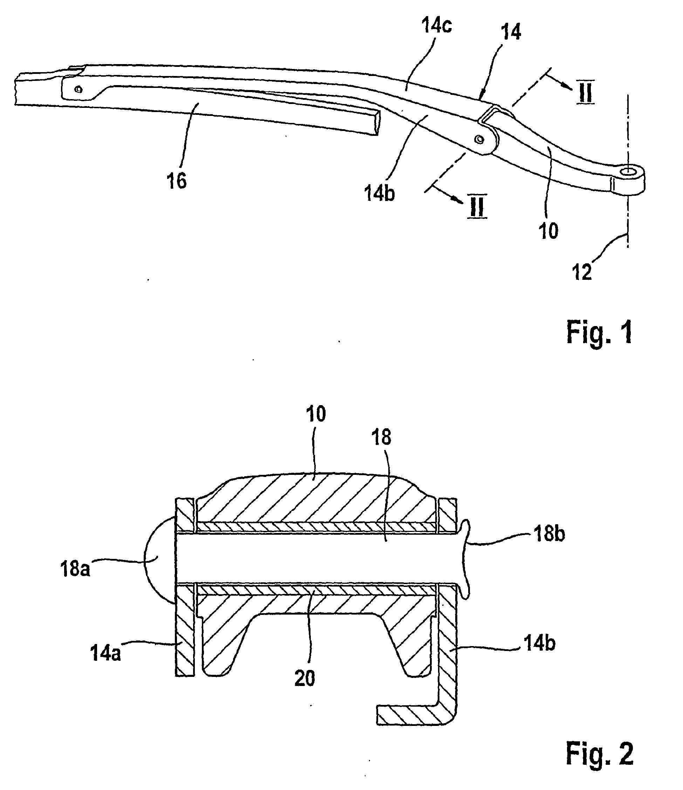

Der in Figur 1 beispielshalber gezeigte Wischarm für die Scheibenreinigungsanlage eines Kraftfahrzeugs ist eine moderne Bauform mit flachem Wischblatt. Er besteht im wesentlichen aus einem Wischarmbefestigungsteil 10, das an seinem einen axialen Ende auf einer Wischerwelle 12 befestigt wird, einem Wischarmgelenkteil 14, das am anderen Ende des Wischarmbefestigungsteils 10 gelenkig angeschlossen ist, und einem Wischblatt 16, das an dem vom Wischarmbefestigungsteil 10 abgewandten Ende des Wischarmgelenkteils 14 gelenkig angeschlossen ist.

Das Wischarmgelenkteil 14 hat im Querschnitt die Form eines U-Kanals mit zwei parallelen Schenkeln 14a, 14b und einem diese verbindenden Steg 14c. Die Gelenkverbindung zwischen dem Wischarmbefestigungsteil 10 und dem Wischarmgelenkteil 14 ist in Figur 2 vergrößert dargestellt.

Wie aus Figur 2 ersichtlich, haben die Schenkel 14a, 14b fluchtende Bohrungen, durch die ein Gelenkbolzen 18 eingesetzt ist. Der Nietbolzen 18 hat auf der Seite des Schenkels 14a einen Nietkopf 18a und am gegenüberliegenden Ende eine Stauchung 18b. Der Gelenkbolzen 18 durchragt eine Lagerhülse 20, die in eine durchgehende Bohrung des Wischarmbefestigungsteils 10 eingepreßt ist. Man sieht in der Darstellung, daß die Schenkel 14a, 14b auf ihrer innenliegenden Seite durch den Körper des Wischarmbefestigungsteils 10 abgedeckt werden, wobei die Verhältnisse noch dadurch erschwert werden, daß der Schenkel 14b ein abgewinkeltes Ende aufweist, das als Anschlag zur Begrenzung der hochgeklappten Stellung des Wischarms dient. Da das Wischarmgelenkteil 14 aus Stahlblech gefertigt wird, muß es zum Korrosionsschutz lackiert werden. Kritisch sind die innenliegenden Flächen der Schenkel 14a, 14b, da sie an den Seitenflächen des Wischarmbefestigungsteils 10 anliegen, das aus einem Metalldruckgußteil besteht, beispielsweise Zinkdruckguß oder Aluminiumdruckguß. Durch Korrosion an den Innenflächen der Schenkel 14a, 14b erhöht sich die Reibung zwischen Gelenkteil und Befestigungsteil, wodurch die Leichtgängigkeit der Gelenkverbindung beeinträchtigt wird. Dadurch aber wird der durch eine in der Zeichnung nicht sichtbare Zugfeder, die zwischen Gelenkteil und Befestigungsteil eingehängt ist, erzeugte Anpreßdruck für das Wischblatt 16 auf der zu reinigenden Scheibe vermindert. Die Folge kann eine verschlechterte oder gar ausgefallene Wischfunktion sein.

Da die Lackierung des Wischarms im montierten Zustand von Wischarmbefestigungsteil 10 und Wischarmgelenkteil 14 erfolgt, kommt nach dem heutigen Stand der Technik nur eine Tauchlackierung in Betracht, durch die ein sicherer Lackauftrag auch an den verdeckten Flächen gewährleistet wird, so daß eine Korrosion der innenliegenden Flächen des Gelenkteils sicher verhindert wird.

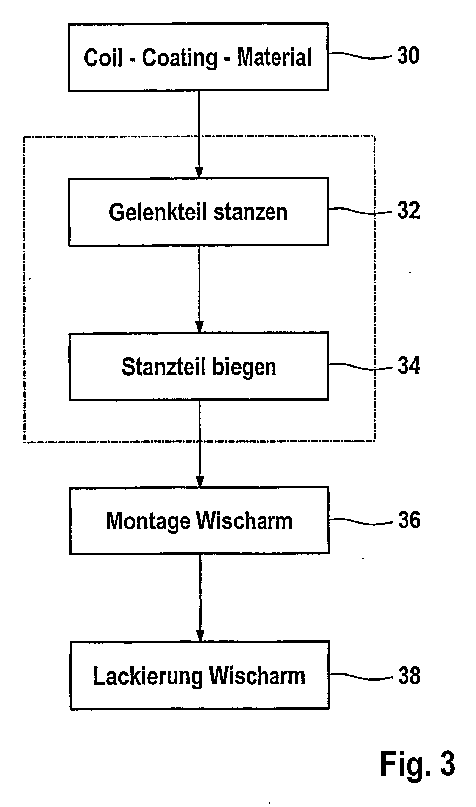

Bei dem erfindungsgemäßen Verfahren wird das Wischarmgelenkteil 14 aus einem einseitig vorbeschichteten Blechmaterial hergestellt. Demnach besteht der erste Schritt 30 in Figur 3 in der Bereitstellung eines einseitig vorbeschichteten Blechmaterials, das auch als "Coil-Coating-Material" bekannt ist. Bei diesem Material ist das Stahlblech einseitig grundiert und mit einer Beschichtung aus einem Lacksystem versehen, bei dem es sich um dasselbe Lacksystem handeln kann, das auch zur Lackierung von Wischarmen verwendet wird. Abweichend von üblichem Coil-Coating-Material hat jedoch das bei dem erfindungsgemäßen Verfahren eingesetzte Material eine Dicke von etwa 1,2 bis etwa 2 mm, gegenüber üblichen Materialdicken von beispielsweise 0,4 mm.

Im zweiten Schritt 32 wird ein Gelenkteilrohling aus dem Coil-Coating-Material ausgestanzt; im dritten Schritt 34 wird das Stanzteil gebogen und in die aus Figur 1 ersichtliche Form gebracht. Dabei bildet die beschichtete Seite des Coil-Coating-Materials die Innenfläche des Wischarmgelenkteils 14. Anschließend erfolgt im Schritt 36 die Montage des Wischarms. Im abschließenden Schritt 38 wird der gesamte Wischarm lackiert, wobei nun ein herkömmliches Spritzverfahren oder eine Pulverbeschichtung Anwendung finden können. Dabei ist zwar nicht gewährleistet, daß die abgedeckten Innenflächen des Wischarmgelenkteils 14 einen Lackauftrag erhalten, dies ist jedoch unbedenklich, da diese Flächen bereits mit der Beschichtung des Coil-Coating-Materials versehen sind.

## Patentansprüche

1. Verfahren zur Herstellung eines Wischarms (10, 14), insbesondere für Scheibenreinigungsanlagen in Fahrzeugen, mit einem Wischarmbefestigungsteil (10) und einem Wischarmgelenkteil (14), **dadurch gekennzeichnet, daß** das Wischarmgelenkteil (14) aus einem einseitig vorbeschichteten Blechmaterial gestanzt und so U-kanalförmig gebogen wird, daß die beschichtete Fläche innenseitig gelegen ist, daß das Wischarmbefestigungsteil (10) mit dem Wischarmgelenkteil (14) mittels eines Gelenkbolzens (18) zusammengebaut wird und daß anschließend der Wischarm (10, 14) durch eine Spritz- oder Pulvertechnik mit einer Lackschicht versehen wird.

2. Verfahren nach Anspruch 1, **dadurch gekennzeichnet, daß** das Wischarmgelenkteil (14) aus einem einseitig vorbeschichteten Blechmaterial einer Dicke von etwa 1,2 bis etwa 2 mm hergestellt wird.

3. Verfahren nach einem der Ansprüche 1 bis 2, **dadurch gekennzeichnet, daß als** einseitig vorbeschichtetes Blechmaterial ein Coil-Coating-Material verwendet wird.

4. Verfahren nach einem der Ansprüche 1 bis 3, **dadurch gekennzeichnet, daß** das Wischarmbefestigungsteil (10) als Metalldruckgußteil ausgebildet wird.

5. Verfahren nach Anspruch 4, **dadurch gekennzeichnet, daß** das Wischarmbefestigungsteil (10) mit einer Lagerbuchse (20) für den Durchgang des Gelenkbolzens (18) ausgebildet wird.

6. Verfahren nach einem der Ansprüche 2 bis 5, **dadurch gekennzeichnet, daß** der Gelenkbolzen (18) die parallelen Schenkel (14a, 14b) des Wischarmgelenkteils (14) durchragt und als Niet mit einem Nietkopf (18a) am einen Ende und einer Stauchung (18b) am anderen axialen Ende ausgebildet wird.

7. Wischarm (10, 14) mit flachem Wischblatt (16), mit einem Wischarmbefestigungsteil (10) und einem mit diesem durch einen Gelenkbolzen (18) verbundenen Wischarmgelenkteil (14), das einen U-kanalförmigen Querschnitt aufweist, **dadurch gekennzeichnet, daß** das Wischarmgelenkteil (14) aus einem einseitig vorbeschichteten Blechmaterial einer Dicke von etwa 1,2 bis etwa 2 mm besteht und die beschichtete Fläche innenseitig angeordnet ist.

## Claims

1. Method of manufacture of a wiper arm (10, 14), particularly for windscreen wiper modules in vehicles, with a wiper arm fixing component (10) and a wiper arm retainer (14), **characterised in that** the wiper arm retainer (14) is punched from a sheet material pre-coated on one side and is bent such that the coated surface lies on the inside, the wiper arm fixing component (10) is assembled with the wiper arm retainer (14) by means of a pivot bolt (18) and subsequently the wiper arm (10, 14) is provided with a coat of lacquer by means of a spray or powder method.

2. Method according to claim 1, **characterised in that** the wiper arm retainer (14) is manufactured from a sheet material pre-coated on one side of a thickness of approximately 1.2 to approximately 2 mm.

3. Method according to one of claims 1 to 2, **characterised in that** a coil-coating material is used as sheet material pre-coated on one side.

4. Method according to one of claims 1 to 3, **characterised in that** the wiper arm fixing component (10) is designed as a die-cast metal component.

5. Method according to claim 4, **characterised in that** the wiper arm fixing component (10) is designed with a bearing bushing (20) for passage of the pivot bolt (18).

6. Method according to one of claims 2 to 5, **characterised in that** the pivot bolt (18) protrudes through the parallel shanks (14a, 14b) of the wiper arm retainer (14) and is designed as a rivet with a rivet head (18a) at one end and a compression (18b) at the other axial end.

7. Wiper arm (10, 14) with a flat wiper blade (16) with a wiper arm fixing component (10) and a wiper arm retainer (14), connected to the latter by a pivot bolt (18), presenting a U channel-shaped cross-section, **characterised in that** the wiper arm retainer (14) consists of a sheet material pre-coated on one side of a thickness of approximately 1.2 to approximately 2 mm and the coated surface is arranged on the inside.

## Revendications

1. Procédé de fabrication d'un porte balai (10, 14) destiné en particulier au nettoyage de vitres de véhicules, comportant au entraîneur de porte balai (10) et un carter de porte balai (14), **caractérisé en ce que** le carter de porte balai (14) est embouti à partir d'un matériau de tôle pré-revêtu sur une face et est cintré à la forme d'un canal en U de telle manière que la surface revêtue se trouve à l'intérieur, **en ce que** l'entraîneur de pote balai (10) est assemblé au carter de porte balai (14) au moyen d'un maneton 18, et **en ce que** le porte balai (10, 14) est ensuite muni d'une couche de laque en utilisant une technique de pulvérisation ou d'application de poudre.

2. Procédé selon la revendication 1, **caractérisé en ce que** le carter de porte balai (14) est consisté d'un matériau de tôle pré-revêtu sur une face d'une épaisseur d'environ 1,2 à environ 2 mm.

3. Procédé selon une des revendications 1 et 2, **caractérisé en ce qu'**on utilise comme matériau de tôle pré-revêtu sur une face un matériau coil-coating.

4. Procédé selon une des revendications 1 à 3, **caractérisé en ce que** l'entraîneur de porte balai (10) est réalisé sous la forme d'un élément métallique coulé sous pression.

5. Procédé selon la revendication 5, **caractérisé en ce que** l'entraîneur de porte balai (10) est réalisé pour présenter une douille de palier (20) destinée au passage du maneton 18.

6. Procédé selon une des revendications 2 à 5, **caractérisé en ce que** le maneton (18) dépasse des branches parallèles du carter de porte balai (14) et est réalisé sous la forme d'un rivet présentant une tête de rivet (18a) à une extrémité et un écrasement (18b) à l'autre extrémité axiale.

7. Porte balai (10, 14) portant un balai plat (16), comportant un entraîneur de porte balai (10) et un carter de porte balai (14) relié à ce dernier par un maneton (18) et présentant une section transversale en forme de canal en U, **caractérisé en ce que** le carter de porte balai (14) est constitué d'un matériau de tôle pré-revêtu sur une face d'une épaisseur d'environ 1,2 à environ 2 mm et **en ce que** la surface revêtue est disposée côté intérieur.
